# EUROPEAN PATENT APPLICATION

(11) **EP 4 564 067 A1**
(43) Date of publication of application: **04.06.2025**
(21) Application number: 23845086.0
(22) Date of filing: 06.06.2023
(51) Int. Cl.: G02B 6/12

(54) **OPTICAL COUPLING DEVICE, OPTICAL CHIP AND OPTICAL MODULE**

(30) Priority: 27.07.2022 CN 202210888969
(71) Applicant: Innolight Technology (Suzhou) Ltd., Suzhou, Jiangsu 215000 (CN)
(72) Inventor: TENG, Min, Suzhou, Jiangsu 215000 (CN); WU, Hao, Suzhou, Jiangsu 215000 (CN); ZHENG, Xuezhe, Suzhou, Jiangsu 215000 (CN)
(74) Representative: Becker, Eberhard
(86) International application number: PCT/CN2023/098485
(87) International publication number: WO 2024/021873

(57) **Abstract**

The present application relates to an optical coupling device, an optical chip, and an optical module. The optical coupling device includes: a middle layer light-splitting structure, which is used for receiving incident light and splitting the incident light into multiple beams of light, and which comprise a plurality of light-emitting coupling units, each light-emitting coupling unit being used for outputting one beam of light; and a plurality of silicon optical coupling devices, the front end of each silicon optical coupling device being covered by one of the light-emitting coupling units, and the silicon optical coupling devices being used for coupling the light outputted by each light-emitting coupling unit. The embodiment of the present application is different from a conventional approach of coupling incident light by means of silicon-based inverted conical coupling. By receiving incident light by means of the middle layer light-splitting structure and splitting the incident light, optical power transmitted to the silicon optical coupling devices can be effectively reduced, and damage to a silicon waveguide can thus be effectively reduced. Therefore, the optical coupling device of the optical chip in the embodiment of the present application can withstand large optical power.

## Description

This application claims the priority benefit of China application serial no. 202210888969.1, filed on July 27, 2022 and entitled "OPTICAL COUPLING DEVICE, OPTICAL CHIP AND OPTICAL MODULE", the entirety of the above-mentioned patent application is hereby incorporated by reference herein and made a part of this specification.

### Technical Field

This application relates to the field of semiconductor integration, particularly to an optical coupling device, an optical chip, and an optical module.

### Description of Related Art

With the development of semiconductor integration technology, in the existing silicon optical chip structure, the scheme of providing light sources for a plurality of signal paths using one laser typically involves first coupling this laser to its silicon optical chip through an inverted conical coupling device, and then dividing the light source into two or four paths through a first-level or second-level beam-splitting structure.

However, the problem with the existing structure is that the optical power density is relatively high before light splitting, which might easily cause damage defects to the silicon waveguide.

### SUMMARY

### Technical Problem

In view of the foregoing, it is necessary to provide an optical coupling device, an optical chip, and an optical module to address the problem of silicon waveguide damage defects in conventional technology.

### Technical Solutions

In view of the foregoing, it is necessary to provide an optical coupling device, an optical chip, and an optical module to address the problem of silicon waveguide damage defects in conventional technology.

In view of the foregoing, it is necessary to provide an optical coupling device, an optical chip, and an optical module to address the problem of silicon waveguide damage defects in conventional technology.

An optical coupling device, including:
A middle layer light-splitting structure, which is configured to receive incident light and split the incident light into a plurality of beams of light, and which includes a plurality of light-emitting units, each light-emitting unit being configured to output one beam of light;
A plurality of silicon optical coupling devices, the front end of each silicon optical coupling device being covered by one of the light-emitting units, and the silicon optical coupling devices being configured to couple the light outputted by each light-emitting unit.

In an embodiment, the middle layer light-splitting structure includes:
An N-level light-splitting structure, each level of the light-splitting structure having a plurality of light output ends, the light input end of a subsequent level of the light-splitting structure connecting to the light output end of a previous level of the light-splitting structure, a last level of the light-splitting structure including the light-emitting units, wherein N is a positive integer.

In an embodiment, the N-level light-splitting structure includes:
An i-th level light-splitting structure, configured to divide the received light into a plurality of beams of light, each of the plurality of beams of light output through one of the light output ends, wherein i is a positive integer;
An i+1-th level light-splitting structure, with the light input end connecting to one of the light output ends of the i-th level light-splitting structure, and dividing the received light into the plurality of beams of light, wherein i is a positive integer.

In an embodiment, each of the i-th level light-splitting structures is connected to the plurality of i+1-th level light-splitting structures, and each of the i+1-th level light-splitting structures divides the received light into the same number of beams of light.

In an embodiment, the i-th level light-splitting structure divides the received incident light into n1 beams of light, the i+1-th level light-splitting structure divides the received light into n2 beams of light, wherein n1 equals n2, and n1 and n2 are positive integers greater than or equal to 2.

In an embodiment, the middle layer light-splitting structure is in the form of a ridge waveguide or a bar waveguide.

In an embodiment, the material of the middle layer light-splitting structure includes any one or more of silicon oxynitride, silicon nitride, and organic materials.

In an embodiment, the middle layer light-splitting structure includes a multimode interference structure, a trident light-splitting structure, and the silicon optical coupling device includes an inverted conical coupling structure.

An optical chip, including the optical coupling device according to any one of the above embodiments.

An optical module, including:
An optical fiber, configured to emit incident light towards the optical chip;
An optical chip, including the optical coupling device according to any one of the above embodiments.

### Beneficial Effects

The above-mentioned middle layer light-splitting structure 10 and silicon optical coupling device 20 differ from the conventional method of directly coupling the incident light emitted from the optical fiber 100 to the silicon optical chip through an inverted conical coupling device and then dividing the light into the plurality of beams of light by a light splitter. Instead, by dividing the middle layer light-splitting structure 10 into the plurality of levels while simultaneously splitting the incident light into the plurality of beams of light, and then covering the silicon optical coupling device 20 with the plurality of light-emitting units 11, light splitting and coupling are completed, thereby reducing the damage to the silicon waveguide caused by excessive optical power.

In the meantime, conventionally, the incident light is coupled through a silicon-based inverted conical coupling structure, which requires a more precise tip size, with its thickness, width, and sidewall thickness all needing to be very precise, leading to insufficient process tolerance and low product yield. However, in the embodiment of this application, the light-emitting coupling unit 11 of the middle layer light-splitting structure 10 wraps around the front end of the silicon optical coupling device 20, which has a larger area, thereby effectively reducing process difficulty, improving process tolerance, and increasing product yield.

Also, conventional silicon-based inverted conical coupling devices are not able to maintain coupling efficiency in dual-polarization designs. The middle layer light-splitting structure 10 in the embodiment of this application may achieve polarization-insensitive light spot size matching, while improving coupling efficiency and yield.

### BRIEF DESCRIPTION OF THE DRAWINGS

To more clearly explain the technical solutions in the embodiments of this application or in the conventional technology, a brief introduction will be given below to the drawings that need to be used in the description of the embodiments or the conventional technology. Clearly, the drawings described below are only some embodiments of this application. For those skilled in the art, other drawings may be obtained based on these drawings without creative effort.
FIG. 1 is a schematic view of an optical module provided in an embodiment.
FIG. 2 to FIG. 12 are top views of optical coupling devices provided in different embodiments.
FIG. 13 to FIG. 16 are cross-sectional views of ridge waveguide and bar waveguide structures in different embodiments.

Description of reference numerals: 100-optical fiber, 200-optical chip, 300-optical coupling device, 10-middle layer light-splitting structure, 20-silicon optical coupling device, 11-light-emitting unit, 12-first-level light-splitting structure, 13-second-level light-splitting structure, 14-third-level light-splitting structure, 30-bottom unit, 31-waveguide unit, 32-substrate, 33-lower cladding.

### DESCRIPTION OF THE EMBODIMENTS

To facilitate understanding of this application, a more comprehensive description of this application will be given below with reference to the relevant drawings. The embodiments of this application are given in the drawings. However, this application may be implemented in many different forms and is not limited to the embodiments described herein. On the contrary, the purpose of providing these embodiments is to make the disclosure of this application more thorough and comprehensive.

Unless otherwise defined, all technical and scientific terminology used herein have the same meanings as commonly understood by those skilled in the art to which this application pertains. The terminology used in the specification of this application is for the purpose of describing specific embodiments only and is not intended to limit this application.

It should be understood that when an element or layer is referred to as being "on", "adjacent to", "connected to" or "coupled to" another element or layer, it may be directly on, adjacent to, connected or coupled to the other element or layer, or intervening elements or layers may be present. In contrast, when an element is referred to as being "directly on", "directly adjacent to", "directly connected to" or "directly coupled to" another element or layer, there are no intervening elements or layers present. It should be understood that although the terms first, second, third, etc. may be used to describe various elements, components, regions, layers, doping types and/or parts, these elements, components, regions, layers, doping types and/or parts should not be limited by these terms. These terms are only used to distinguish one element, component, region, layer, doping type or part from another element, component, region, layer, doping type or part. Therefore, without departing from the teachings of this disclosure, a first element, component, region, layer, doping type or part discussed below may be termed a second element, component, region, layer or part; for example, a first doping type may be termed a second doping type, and similarly, a second doping type may be termed a first doping type; the first doping type and the second doping type are different doping types, for instance, the first doping type may be P-type and the second doping type may be N-type, or the first doping type may be N-type and the second doping type may be P-type.

Spatial relationship terms such as "under", "beneath", "below" "lower than", "above", "upper than", etc., may be used herein to describe the relationship of one element or feature to another element or feature as illustrated in the figures. It should be understood that in addition to the orientations shown in the figures, spatial relationship terms also encompass different orientations of the device in use and operation. For example, if the device in the figure is turned over, elements or features described as "below" or "beneath" or "under" other elements or features would then be oriented "above" the other elements or features. Thus, the exemplary terms "below" and "under" may encompass both an orientation of above and below. Furthermore, the device may also be oriented differently (for instance, rotated 90 degrees or other orientations), and the spatial descriptors used herein may be interpreted accordingly.

As used herein, the singular forms "a", "an" and "the" may also include plural forms, unless the context clearly indicates otherwise. It should also be understood that the terms "include/comprising" or "have" specify the presence of stated features, integers, steps, operations, components, parts or combinations thereof, but do not preclude the possibility of the presence or addition of one or more other features, integers, steps, operations, components, parts or combinations thereof. Additionally, in this specification, the term "and/or" includes any and all combinations of the associated listed items.

Here, the embodiments of the disclosure are described with reference to schematic cross-sectional views as ideal embodiments (and intermediate structures) of the disclosure, such that variations from the shapes shown may be expected due to, for example, manufacturing techniques and/or tolerances. Thus, embodiments of the disclosure should not be construed as limited to the particular shapes of regions shown herein, but may include deviations in shapes that result from, for example, manufacturing techniques. For instance, an implanted region shown as rectangular may typically have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the disclosure.

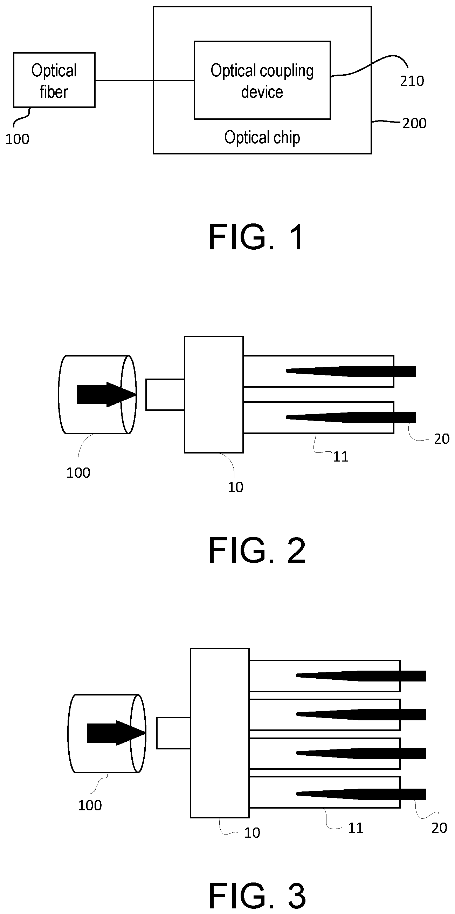

In an embodiment, please refer to FIG. 1, an optical module is provided, including: an optical fiber 100 and an optical chip 200. The optical chip 200 includes an optical coupling device 210. The optical fiber 100 emits incident light. The optical coupling device 210 of the optical chip 200 aligns with the optical fiber 100 to receive the incident light emitted therefrom.

Specifically, the optical module may include: a directly modulated and directly detected optical module, a coherent optical module, a co-packaged optical module, etc.

Specifically, for the directly modulated and directly detected optical module, to reduce costs, one laser may be used as a light source for the plurality of channels. For the coherent optical module, when carrying high-intensity light source input, the coherent optical module may significantly improve the sensitivity of the receiving end to obtain more transmission link budget. For the co-packaged optical module, using one laser as the light source for the plurality of channels may effectively save the area of optical port devices on the chip.

In an embodiment, please refer to FIG. 2, an optical coupling device is provided, including an middle layer light-splitting structure 10 and a silicon optical coupling device 20.

The middle layer light-splitting structure 10 is configured to receive the incident light emitted from the optical fiber 100, and divide the incident light into a plurality of beams of light.

The material of the middle layer light-splitting structure 10 includes, but is not limited to, any one or more of silicon oxynitride, silicon nitride, organic materials, and is not limited herein.

Specifically, the middle layer light-splitting structure 10 includes a plurality of light-emitting coupling units 11. Each light-emitting coupling unit 11 is configured to output one of the plurality of beams of light divided from the incident light. Here, "a plurality of" means two or more.

In the meantime, this embodiment includes a plurality of silicon optical coupling devices 20. The silicon optical coupling devices may include, but are not limited to, inverted conical coupling structures.

The silicon optical coupling devices 20 may be configured in one-to-one correspondence with the light-emitting coupling units 11 of the middle layer light-splitting structure 10, and their quantity may be the same as the quantity of the light-emitting coupling units 11. Each silicon optical coupling device 20 is covered by one light-emitting coupling unit 11, thereby coupling with the same. The plurality of silicon optical coupling devices 20 may provide light sources for the plurality of channels, with each silicon optical coupling device 20 providing one light source for one channel.

Specifically, for a silicon optical coupling device 20, the front end thereof may be covered by the corresponding light-emitting coupling unit 11, thereby coupling the light transmitted in the light-emitting coupling unit 11 to the silicon optical coupling device 20, and the light is transmitted on the silicon optical coupling device 20.

As an example, please refer to FIG. 2, the middle layer light-splitting structure 10 includes two light-emitting coupling units 11, and is configured to divide the received incident light into two beams of light, with each of the beams of light coupled to the front end of the silicon optical coupling device 20 through one light-emitting coupling unit 11, and then transmitted along the silicon optical coupling device 20.

Alternatively, please refer to FIG. 3, the middle layer light-splitting structure 10 includes four light-emitting coupling units 11, and is configured to divide the received incident light into four beams of light, with each of the beams of light coupled to the front end of the silicon optical coupling device 20 through one light-emitting coupling unit 11, and then transmitted along the silicon optical coupling device 20.

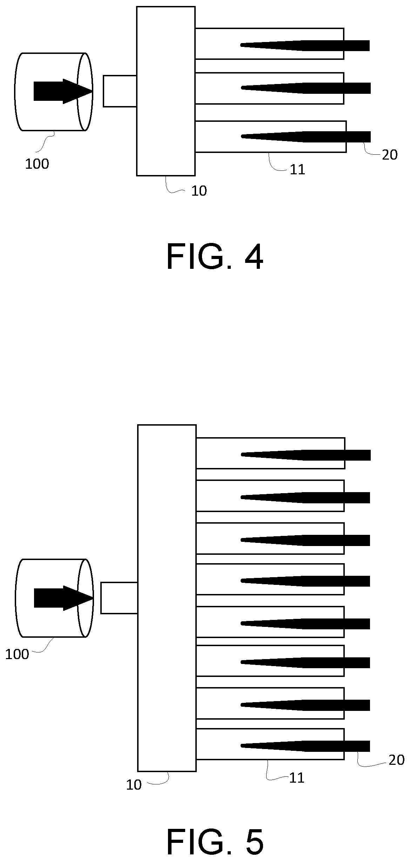

Alternatively, please refer to FIG. 4, the middle layer light-splitting structure 10 includes three light-emitting coupling units 11, and is configured to divide the received incident light into three beams of light, with each of the beams of light coupled to the front end of the silicon optical coupling device 20 through one light-emitting coupling unit 11, and then transmitted along the silicon optical coupling device 20.

Alternatively, please refer to FIG. 5, the middle layer light-splitting structure 10 includes eight light-emitting coupling units 11, and is configured to divide the received incident light into eight beams of light, with each of the beams of light coupled to the front end of the silicon optical coupling device 20 through one light-emitting coupling unit 11, and then transmitted along the silicon optical coupling device 20.

As an example, the middle layer light-splitting structure 10 may be in the form of a ridge waveguide or a bar waveguide. The ridge waveguide includes a bottom unit 30a and a waveguide unit 30b, which may be formed by patterned etching of middle layer materials such as silicon oxynitride. The waveguide unit 30b is not etched and protrudes upward relative to the bottom unit 30a, and includes the light-emitting coupling unit 11. The light-emitting coupling unit 11 is located at one end of the waveguide unit 30b away from the optical fiber 100. The light-emitting coupling unit 11 covers the front end of each silicon optical coupling device 20. The bar waveguide is a waveguide structure formed after etching and removing the bottom unit 30a on both sides of the waveguide unit 30b of the ridge waveguide.

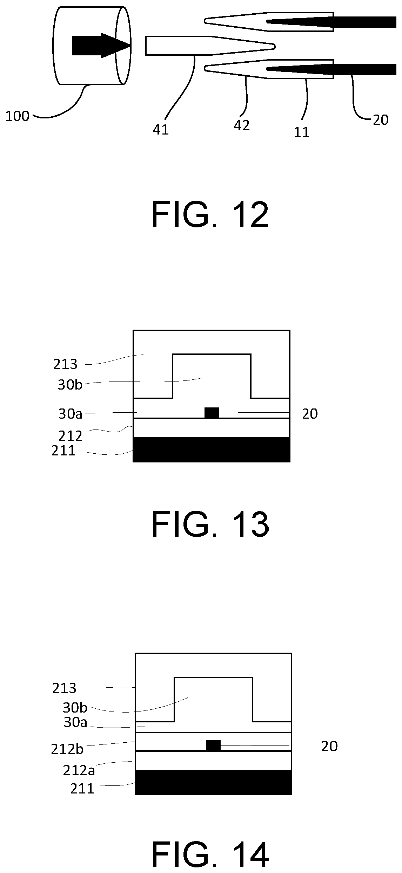

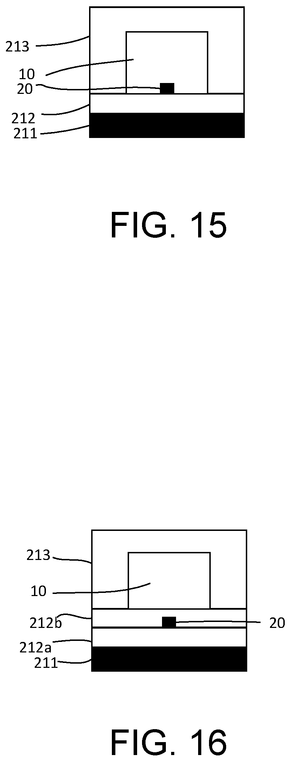

As an example, please refer to FIG. 13 or FIG. 15, the optical coupling device 210 may also include a substrate 211, a lower cladding 212, and an upper cladding 213. The lower cladding 212 is formed on the substrate 211, and the silicon optical coupling device 20 is formed on the lower cladding 212. The middle layer light-splitting structure 10 covers the lower cladding 212 and covers and wraps the silicon optical coupling device 20 located on the lower cladding 212, with the upper cladding 213 positioned on the middle layer light-splitting structure 10.

Specifically, please refer to FIG. 13, when the middle layer light-splitting structure 10 is in the form of a ridge waveguide, the bottom unit 30a thereof covers the lower cladding 212, the waveguide unit 30b protrudes upward from the bottom unit 30a, and the light-emitting coupling unit 11 at one end thereof covers the front end of each silicon optical coupling device 20. Meanwhile, the waveguide unit 30b receives the incident light, divides the incident light into the plurality of beams of light, and couples the incident light to the front end of the silicon optical coupling device 20 through the light-emitting coupling unit 11, then the incident light is transmitted along the silicon optical coupling device 20.

Please refer to FIG. 15, when the middle layer light-splitting structure 10 is in the form of a bar waveguide, a portion of the area above the lower cladding 212 is covered by the bar waveguide. One end of the bar waveguide away from the optical fiber 100 is provided with a light-emitting coupling unit 11, and the light-emitting coupling unit 11 wraps the front end of the silicon optical coupling device 20. The bar waveguide structure receives the incident light at one end thereof close to the optical fiber 100, then divides the incident light into the plurality of beams of light, and couples the incident light to the front end of the silicon optical coupling device 20 through the light-emitting coupling unit 11, then the incident light is transmitted along the silicon optical coupling device 20.

As an example, please refer to FIG. 14 or FIG. 16, the optical coupling device 210 may further include a substrate 211, a lower cladding 212, and an upper cladding 213. The lower cladding 212 further includes a first lower cladding 212a and a second lower cladding 212b. The first lower cladding 212a is formed on the substrate 211, and the silicon optical coupling device 20 is formed on the first lower cladding 212a. The second lower cladding 212b covers the silicon optical coupling device 20. The middle layer light-splitting structure 10 is located on the second lower cladding 212b and covers the second lower cladding 212b. The upper cladding 213 is positioned on the middle layer light-splitting structure 10.

Specifically, please refer to FIG. 14, when the middle layer light-splitting structure 10 is in the form of a ridge waveguide, the bottom unit 30a thereof covers the second lower cladding 212b, the waveguide unit 30b protrudes upward from the bottom unit 30a, and the light-emitting coupling unit 11 at one end thereof covers the front end of the silicon optical coupling device 20. Meanwhile, the waveguide unit 30b receives the incident light, divides the incident light into the plurality of beams of light, and couples the incident light to the front end of the silicon optical coupling device 20 through the light-emitting coupling unit 11, then the incident light is transmitted along the silicon optical coupling device 20.

Specifically, please refer to FIG. 16, when the middle layer light-splitting structure 10 is in the form of a bar waveguide, a portion of the area above the second lower cladding 212b is covered by the bar waveguide, and the light-emitting coupling unit 11 at one end of the bar waveguide covers the front end of each silicon optical coupling device 20. The upper cladding covers the second lower cladding 212b and the middle layer light-splitting structure 10 located on the second lower cladding 212b. Meanwhile, the bar waveguide receives the incident light, divides the incident light into the plurality of beams of light, and couples the incident light to the front end of the silicon optical coupling device 20 through the light-emitting coupling unit 11, then the incident light is transmitted along the silicon optical coupling device 20.

In this embodiment, in contrast to the conventional method of coupling incident light through a silicon-based inverted conical coupler, the middle layer light-splitting structure 10 receives the incident light and performs light splitting on the incident light, thereby effectively reducing the optical power transmitted to the silicon optical coupling device 20, which may effectively reduce damage to the silicon waveguide. Therefore, the optical coupling device of the optical chip in this embodiment may withstand higher optical power.

In the meantime, conventional coupling of incident light through a silicon-based inverted conical coupling structure requires a more precise tip size for the silicon-based inverted conical coupling structure, with its thickness, width, and sidewall thickness all needing to be very precise, leading to insufficient process tolerance and low product yield. In contrast, the light-emitting coupling unit 11 of the middle layer light-splitting structure 10 in this embodiment wraps around the front end of the silicon optical coupling device 20, having a larger area, which may effectively reduce process difficulty, improve process tolerance, and increase product yield.

Also, conventional silicon-based inverted conical coupling devices are not able to maintain coupling efficiency in dual-polarization designs. The middle layer light-splitting structure 10 in this embodiment may achieve polarization-insensitive light spot size matching, while improving coupling efficiency and yield.

In an embodiment, the middle layer light-splitting structure includes N-level light-splitting structures. Each level of light-splitting structure may constitute a light splitter, with adjacent levels of light-splitting structures cascaded with each other, where N is a positive integer greater than or equal to 2.

Each level of light-splitting structure has a plurality of light output ends. The number of light output ends for each level of the light-splitting structures may be the same or different, which may be set according to actual requirements. The number of light output ends for different light-splitting structures at the same level may be the same or different, which may also be set according to actual requirements. The light input end of a subsequent level of the light-splitting structure is connected to the light output end of a previous level of the light-splitting structure.

Specifically, the light input end of a subsequent level of the light-splitting structure may be connected to one light output end of a previous level of the light-splitting structure, or may be connected to the plurality of light output ends; there is no limitation on this aspect.

The last level of the light-splitting structure includes a light-emitting coupling unit 11. The light-emitting coupling unit 11 may be distributed on the plurality of last level of the light-splitting structures, thereby forming the plurality of beams of light with the same or different power.

In this embodiment, by setting the middle layer light-splitting structure to include the plurality of levels of light-splitting structures, the plurality of light sources may be obtained according to requirements.

In an embodiment, the N-level middle layer light-splitting structure may include an i-th level light-splitting structure and an i+1-th level light-splitting structure, wherein i is a positive integer.

The i-th level light-splitting structure and the i+1-th level light-splitting structure are configured to divide the received light into the plurality of beams of light, with each of the beams of light output through one light output end. The light input end of one i+1-th level light-splitting structure may be connected to one light output end of the i-th level light-splitting structure. The quantity of the i+1-th level light-splitting structures may be determined based on the total number of light output ends of the i-th level light-splitting structure.

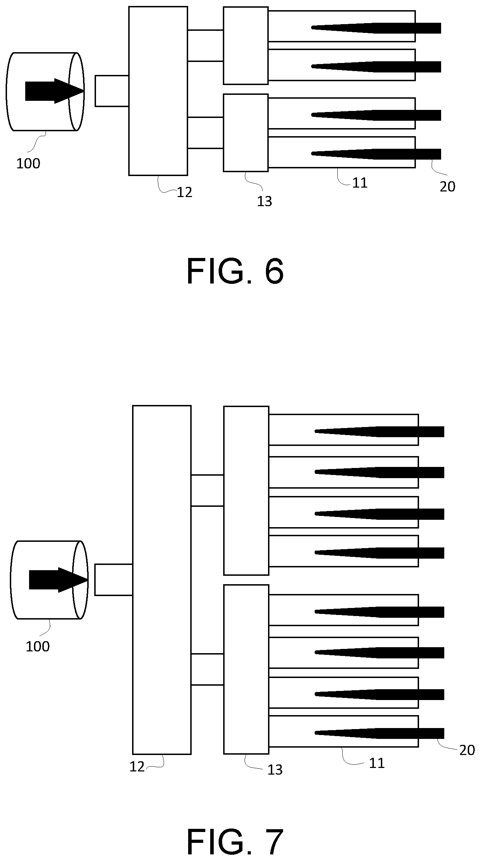

Specifically, for example, the middle layer light-splitting structure may include two levels of light-splitting structures. For example:
Please refer to FIG. 6, the middle layer light-splitting structure 10 includes one first-level middle layer light-splitting structure 12, two second-level middle layer light-splitting structures 13, and each second-level middle layer light-splitting structure 13 may include two light-emitting coupling units 11.

Specifically, the first-level light-splitting structure 12 is configured to divide the received incident light into two beams of light, with each of the beams of light output through one light output end; the light input end of each second-level light-splitting structure 13 is connected to one light output end of the first-level light-splitting structure 12, and divides the received beam of light into two beams of light, each of the beams of light is emitted through one light-emitting coupling unit 11. At this time, the incident light may be equally divided into four beams of light.

Please refer to FIG. 7, the middle layer light-splitting structure 10 includes one first-level middle layer light-splitting structure 12, two second-level middle layer light-splitting structures 13, and each second-level light-splitting structure 13 may include four light-emitting coupling units 11.

Specifically, the first-level light-splitting structure 12 is configured to divide the received incident light into two beams of light, with each of the beams of light output through one light output end; the light input end of each second-level light-splitting structure 13 is connected to one light output end of the first-level light-splitting structure 12, and divides the received beam into four beams of light, each of the beams of light is emitted through one light-emitting coupling unit 11. At this time, the incident light may be evenly divided into eight beams of light.

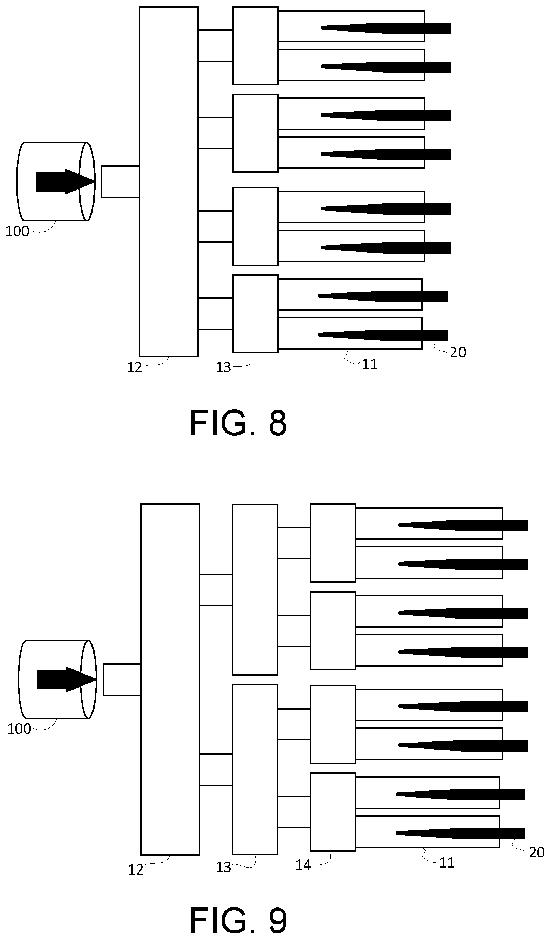

Please refer to FIG. 8, the middle layer light-splitting structure 10 includes one first-level middle layer light-splitting structure 12, four second-level middle layer light-splitting structures 13, and each second-level light-splitting structure 13 may include two light-emitting coupling units 11.

Specifically, the first-level light-splitting structure 12 is configured to divide the received incident light into four beams of light, with each of the beams of light output through one light output end; the light input end of each second-level light-splitting structure 13 is connected to one light output end of the first-level light-splitting structure 12, and divides the received beam of light into two beams of light, each of the beams of light is emitted through one light-emitting coupling unit 11. At this time, the incident light may be evenly divided into eight beams of light.

Of course, the middle layer light-splitting structure 10 may also include three levels or more than three levels of light-splitting structures. For example, when the middle layer light-splitting structure includes third-level light-splitting structures 13:
Please refer to FIG. 9, the middle layer light-splitting structure 10 includes one first-level light-splitting structure 12, two second-level light-splitting structures 13, four third-level light-splitting structures 14, and each third-level light-splitting structure 14 may include two light-emitting coupling units 11.

Specifically, the first-level light-splitting structure 12 is configured to divide the received incident light into two beams of light, with each of the beams of light output through one light output end; the light input end of each second-level light-splitting structure 13 is connected to one light output end of the first-level light-splitting structure 12, and divides the received beam of light into two beams of light; the light input end of each third-level light-splitting structure 14 is connected to one light output end of the second-level light-splitting structure 13, and divides the received beam of light into two beams of light, each of the beams of light is emitted through one light-emitting coupling unit 11. At this time, the incident light may be evenly divided into eight beams of light.

In this embodiment, in the N-level middle layer light-splitting structure, the quantity of subsequent level of the light-splitting structures is determined according to the total number of light output ends of the previous level of the light-splitting structures. The subsequent level of the light-splitting structures connected to each light output end of the previous level of the light-splitting structure are mutually independent, thereby facilitating the light splitting design.

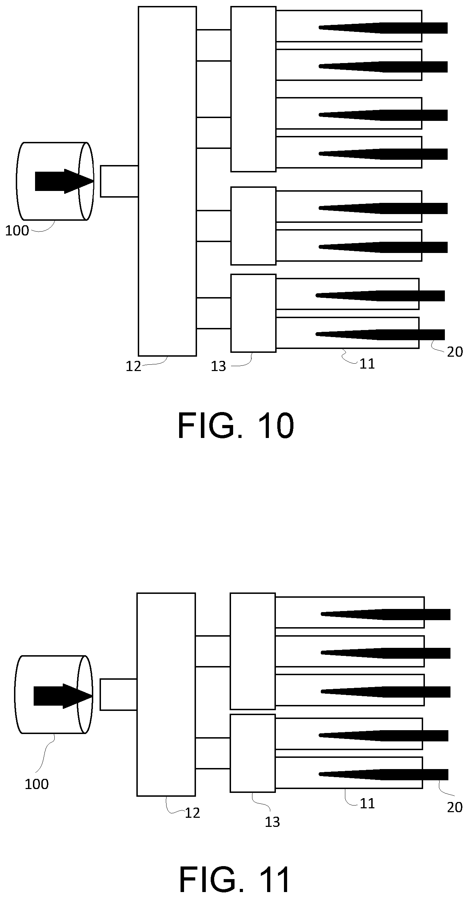

Of course, in other embodiments, the arrangement of each level of middle layer light-splitting structures may also differ from this embodiment, and the quantity of subsequent level of the light-splitting structures may also be different from the total number of light output ends of the previous level of the light-splitting structures. For example, please refer to FIG. 10, the middle layer light-splitting structure 10 includes one first-level light-splitting structure 12 and three second-level light-splitting structures 13. The second-level light-splitting structures 13 have two types of structures, one type of structure includes four light-emitting coupling units 11, and the other type of structure includes two light-emitting coupling units 11.

Specifically, the first-level light-splitting structure 12 is configured to divide the received incident light into four beams of light, with each of the beams of light output through one light output end; the second-level light-splitting structures 13 have two types of structures, the light input end of the first type of second-level light-splitting structure 13 is connected to two light output ends of the first-level light-splitting structure 12, and divides the received beam of light into four beams of light, while the light input end of the second type of second-level light-splitting structure 13 is connected to one light output end of the first-level light-splitting structure 12, and divides the received beam of light into two beams of light. Each of the beams of light emitted from these two types of structures is emitted through one light-emitting coupling unit 11. At this time, the incident light may be evenly divided into eight beams of light.

In an embodiment, each i-th level light-splitting structure is connected to the plurality of i+1-th level light-splitting structures, and each i+1-th level light-splitting structure divides the received light into the same quantity of beams of light.

For example, please refer to FIG. 6, the middle layer light-splitting structure 10 includes one first-level middle layer light-splitting structure 12, two second-level middle layer light-splitting structures 13, and each second-level middle layer light-splitting structure 13 may include two light-emitting coupling units 11.

Specifically, each first-level light-splitting structure 12 is connected to two second-level light-splitting structures 13, and each second-level light-splitting structure divides the received light into two beams of light.

In this embodiment, light-splitting structures at the same level divide the received light into the same quantity of beams of light, thereby facilitating the optical coupling device to divide the receive incident light into the plurality of light with equal light intensity.

Of course, in other embodiments, different light-splitting structures at the same level may also divide the received light into different quantities of beams of light. In this case, light with different light intensity may be obtained according to requirements. For example, please refer to FIG. 11, the middle layer light-splitting structure 10 includes one first-level middle layer light-splitting structure 12, two second-level middle layer light-splitting structures 13, and the second-level middle layer light-splitting structures 13 may include two light-emitting coupling units 11, or may include three light-emitting coupling units 11.

Specifically, the first-level light-splitting structure 12 is connected to two second-level light-splitting structures 13, and the second-level light-splitting structures divide the received beam into two or three beams of light.

In an embodiment, in an N-level light-splitting structure, the i-th level light-splitting structure divides the received incident light into n1 beams of light, the i+1-th level light-splitting structure divides the received light into n2 beams of light, n1 equals n2, and n1 and n2 are positive integers greater than or equal to 2.

Please refer to FIG. 6, the middle layer light-splitting structure 10 includes one first-level light-splitting structure 12 and two second-level light-splitting structures 13. Each second-level light-splitting structure 13 includes two light-emitting coupling units 11. In this case, the first-level light-splitting structure 12 divides the incident light into two beams of light, and the second-level light-splitting structure 13 divides the received light into two beams of light, both being equal.

Of course, the middle layer light-splitting structure 10 may also include three levels or more than three levels of light-splitting structures. For example, when the middle layer light-splitting structure 10 includes third-level light-splitting structures:
Please refer to FIG. 9, the middle layer light-splitting structure 10 includes one first-level light-splitting structure 12, two second-level light-splitting structures 13, and four third-level light-splitting structures 14. Each third-level light-splitting structure 14 includes two light-emitting coupling units 11. In this case, the first-level light-splitting structure 12 divides the incident light into two beams of light, and both the second-level light-splitting structure 13 and the third-level light-splitting structure 14 divide the received light into two beams of light, all three being equal.

In this embodiment, each level of light-splitting structure divides the received incident light into the same quantity of beams of light, thereby enabling a simple and effective way to obtain the plurality of beams of light with equal light intensity.

In an embodiment, the middle layer light-splitting structure 10 may include a multimode interference structure and/or a trident light-splitting structure. Specifically, the middle layer light-splitting structure 10 may only include a multimode interference structure, or may only include a trident light-splitting structure, or may include both a multimode interference structure and a trident light-splitting structure.

For details of the multimode interference structure, please refer to any of FIG. 1 to FIG. 11. For details of the trident light-splitting structure, please refer to FIG. 12, where the middle layer light-splitting structure 10 may include a first waveguide 41 and two second waveguides 42. The two second waveguides 42 are located on both sides of the first waveguide 41 and are spaced apart from the first waveguide 41. One end of the first waveguide 41 may receive incident light emitted from the optical fiber 100, and the other end thereof may couple with the second waveguide 42, thereby dividing the incident light into two beams of light. One end of the second waveguide 42 couples with the first waveguide 41, and the other end thereof may serve as the light-emitting coupling unit 11 to cover the front end of the silicon optical coupling device 20, thus coupling the split beam of light to the silicon optical coupling device 20.

In the description of this specification, references to terms such as "some embodiments", "other embodiments", "ideal embodiments", etc., indicate that the specific features, structures, materials, or characteristics described in connection with the embodiment or example are included in at least an embodiment or example of the present disclosure. In this specification, the illustrative descriptions of the above terms do not necessarily refer to the same embodiment or example.

The technical features of the above-mentioned embodiments may be combined in any manner. For the sake of brevity, not all possible combinations of the technical features in the above embodiments have been described. However, as long as these combinations of technical features do not contradict each other, they should all be considered as within the scope recorded in this specification.

The above-mentioned embodiments only express several embodiments of this application, and their descriptions are relatively specific and detailed, but this should not be understood as a limitation on the scope of the patent application. It should be pointed out that for those skilled in the art, without departing from the concept of this application, several modifications and improvements may still be made, all of which fall within the protection scope of this application. Therefore, the protection scope of this patent application shall be subject to the appended claims.

## Claims

1. An optical coupling device, **characterized in** comprising:
a middle layer light-splitting structure, which is configured to receive incident light and split the incident light into a plurality of beams of light, and comprises a plurality of light-emitting coupling units, each of the light-emitting coupling units being configured to output one of the plurality of beams of light;
a plurality of silicon optical coupling devices, a front end of each of the silicon optical coupling devices being covered by one of the light-emitting coupling units, and the silicon optical coupling devices being configured to couple light outputted by each of the light-emitting coupling units.

2. The optical coupling device according to claim 1, **characterized in that** the middle layer light-splitting structure is in a form of a ridge waveguide or a bar waveguide.

3. The optical coupling device according to claim 1, **characterized in that** the middle layer light-splitting structure comprises:
an N-level light-splitting structure, each level of the light-splitting structure having a plurality of light output ends, a light input end of a subsequent level of the light-splitting structure connecting to a light output end of a previous level of the light-splitting structure, a last level of the light-splitting structure comprising the light-emitting coupling units, wherein N is a positive integer.

4. The optical coupling device according to claim 3, **characterized in that** the N-level light-splitting structure comprises:
an i-th level light-splitting structure, configured to divide a received light into a plurality of beams of light, each of the plurality of beams of light output through one of the light output ends, wherein i is a positive integer;
an i+1-th level light-splitting structure, with a light input end connecting to one of the light output ends of the i-th level light-splitting structure, and dividing the received light into a plurality of beams of light, wherein i is a positive integer.

5. The optical coupling device according to claim 4, **characterized in that** each of the i-th level light-splitting structures is connected to the plurality of i+1-th level light-splitting structures, and each of the i+1-th level light-splitting structures divides the received light into the same number of beams of light.

6. The optical coupling device according to claim 4, **characterized in that** the i-th level light-splitting structure divides the received incident light into n1 beams of light, the i+1-th level light-splitting structure divides the received light into n2 beams of light, wherein n1 equals n2, and n1 and n2 are positive integers greater than or equal to 2.

7. The optical coupling device according to claim 1, **characterized in that** a material of the middle layer light-splitting structure comprises any one or more of silicon oxynitride, silicon nitride, and organic materials.

8. The optical coupling device according to claim 1, **characterized in that** the middle layer light-splitting structure comprises a multimode interference structure and/or a trident light-splitting structure, and the silicon optical coupling device comprises an inverted conical coupling structure.

9. An optical chip, **characterized in** comprising the optical coupling device according to claim 1.

10. An optical module, **characterized in** comprising:
an optical fiber, configured to emit incident light towards the optical chip;
the optical chip according to claim 9.
